# EUROPEAN PATENT SPECIFICATION

(11) **EP 3 578 858 B1**
(45) Date of publication and mention of the grant of the patent: **21.10.2026**
(21) Application number: 18748633.7
(22) Date of filing: 31.01.2018
(51) Int. Cl.: F16J 13/14, B62D 25/24, F16J 15/02

(54) **HOLE PLUG**
ABDECKSTOPFEN
BOUCHON D'ORIFICE

(30) Priority: 01.02.2017 JP 2017016831
(43) Date of publication of application: 11.12.2019
(73) Proprietor: Nifco Inc., Yokosuka-shi, Kanagawa 239-8560 (JP)
(72) Inventor: SATO, Takehiro, Yokosuka-shi Kanagawa 239-8560 (JP)
(74) Representative: DREISS Patentanwälte PartG mbB
(86) International application number: PCT/JP2018/003170
(87) International publication number: WO 2018/143257

(56) References cited:
- DE-A1- 102009 018 395
- JP-A- 2005 207 513
- JP-A- 2015 081 659
- JP-A- 2016 191 462
- US-A1- 2004 232 159
- US-A1- 2008 142 517
- US-A1- 2011 233 950

## Description

### TECHNICAL FIELD

The present disclosure relates to a hole plug.

### BACKGROUND ART

US 2004/232159 A1 discloses a hole plug according to the preamble of claim 1. US 2008/142517 A1 discloses another hole plug. US 2011/233950 A1 discloses a hole plug for blocking a hole provided in a plate-like member, such as a body panel of an automobile and the like. DE 10 2009 018395 A1 relates to a sealing plug for sealing an opening of a body part, with a sealing element made of a flexible plastic. Japanese Patent No. 5,844,207 discloses a hole plug to be attached at a penetrating hole formed in an attachment member. This hole plug is provided with: a tubular outer periphery wall portion that is inserted into the penetrating hole; and an annular flange portion that protrudes toward a radial direction outer side of the outer periphery wall portion from an end portion of the outer periphery wall portion at an opposite side from an insertion direction side of the outer periphery wall portion, the flange portion covering surrounding portions of a burring hole.

### SUMMARY OF INVENTION

### TECHNICAL PROBLEM

However, when the hole plug disclosed in Japanese Patent No. 5,844,207 is attached to a burring hole formed in an attachment member, if the hole plug is pushed more strongly than necessary into the burring hole, the flange portion may deform and be dragged into the interior of the burring hole, and the hole plug may pass through the burring hole.

In consideration of the circumstances described above, an object of the present disclosure is to provide a hole plug that, during attaching to a burring hole formed in an attachment member, is inhibited from passing through the burring hole.

### SOLUTION TO PROBLEM

The present invention provides a hole plug according to claim 1.

### ADVANTAGEOUS EFFECTS OF INVENTION

The present disclosure provides a hole plug that, during attaching to a burring hole formed in an attachment member, is inhibited from passing through the burring hole.

### BRIEF DESCRIPTION OF DRAWINGS

Fig. 1 is a perspective view of a hole plug according to an exemplary embodiment of the present disclosure, seen from diagonally upward.
Fig. 2 is a sectional diagram of the hole plug shown in Fig. 1, cut along line 2-2.
Fig. 3 is a sectional diagram of the hole plug shown in Fig. 1, cut along line 3-3.
Fig. 4 is a sectional diagram (a partial magnified diagram of the section corresponding to Fig. 2) cut along an insertion direction of the hole plug, showing a state in which the hole plug shown in Fig. 1 is attached at a burring hole of an attachment member.
Fig. 5 is a sectional diagram (a partial magnified diagram of the section corresponding to Fig. 2) cut along the insertion direction of the hole plug, showing a state in which the hole plug shown in Fig. 1 is excessively inserted into the burring hole of the attachment member.
Fig. 6 is a sectional diagram (a section corresponding to Fig. 4) of a hole plug according to an alternative embodiment of the present disclosure.
Fig. 7 is a sectional diagram (a section corresponding to Fig. 4) of a hole plug according to another alternative embodiment of the present disclosure.

### DETAILED DESCRIPTION

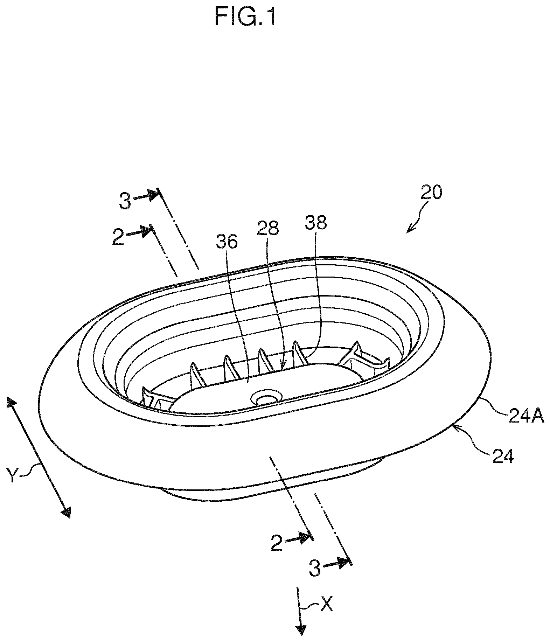

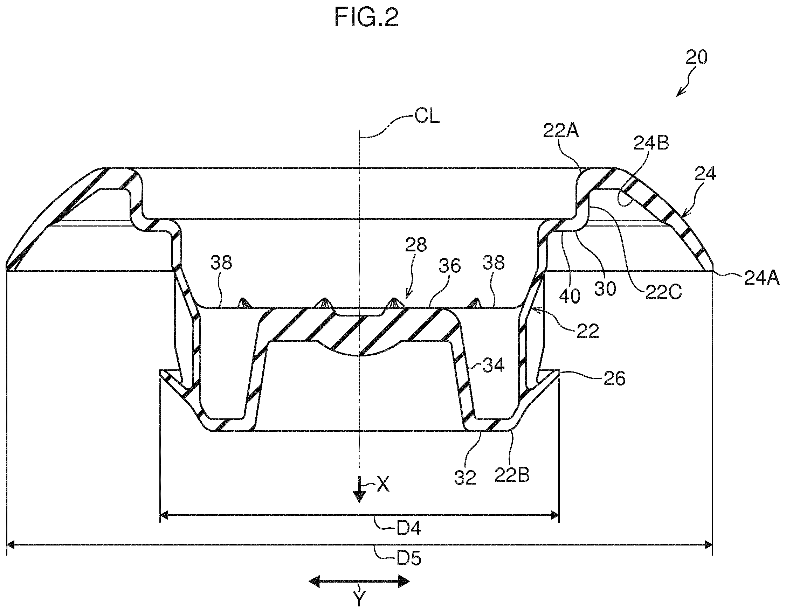

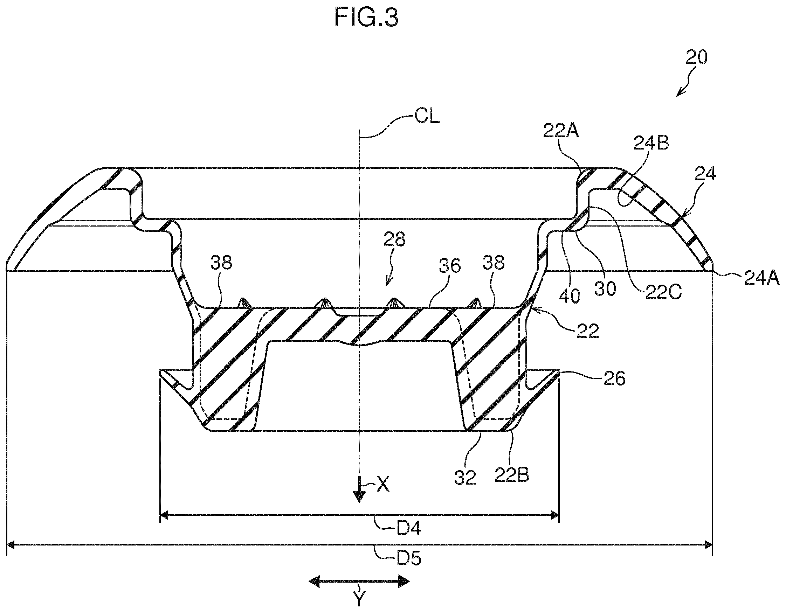

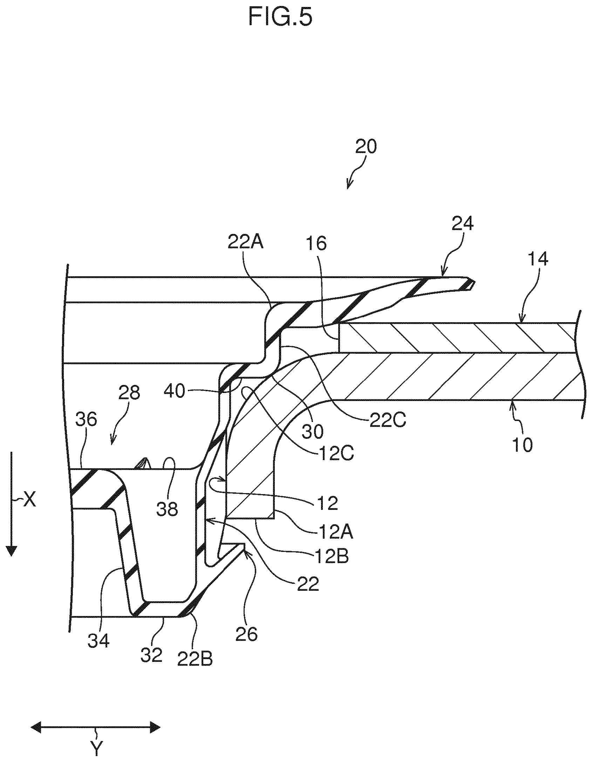

A hole plug 20 according to an exemplary embodiment of the present disclosure is described using Fig. 1 to Fig. 5.

The hole plug 20 according to the present exemplary embodiment is a member that closes off a burring hole 12 formed in a bracket 10. The arrow X that is shown in some of the drawings of Fig. 1 to Fig. 5 indicates an insertion direction (below referred to where appropriate as "the plug insertion direction") of the hole plug 20 (and of an outer periphery wall portion 22, which is described below), and the arrow Y indicates a diametric direction (below referred to where appropriate as "the plug radial direction") of the hole plug 20 (and of the outer periphery wall portion 22 that is described below). The reference symbol CL indicates a center line of the hole plug 20 (and of the outer periphery wall portion 22). The term "plug radial direction inner side" indicates a side that is closer to the center line CL along the plug radial direction, and the term "plug radial direction outer side" indicates a side that is further from the center line CL along the plug radial direction.

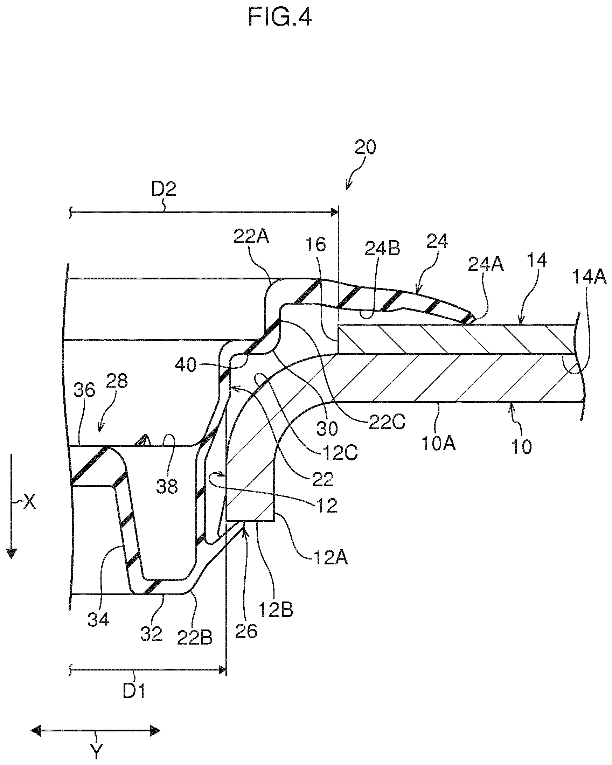

As shown in Fig. 4, the bracket 10 is, for example, a member that is attached to a panel member 14 (a body panel or the like) of a vehicle. The bracket 10 includes a plate-shaped portion 10A. The burring hole 12 is formed in the plate-shaped portion 10A. In a state in which the burring hole 12 of the bracket 10 is aligned with a penetrating hole 16 formed in the panel member 14, the bracket 10 is attached to an inner face 14A of the panel member 14. As shown in Fig. 4, a diameter D1 of the burring hole 12 is smaller than a diameter D2 of the penetrating hole 16. The bracket 10 according to the present exemplary embodiment is an example of an attachment member of the present disclosure.

In the present exemplary embodiment, in the state in which the hole plug 20 is attached to the burring hole 12 of the bracket 10 (the state shown in Fig. 4), a flange portion 24, which is described below, covers as far as surrounding portions of the penetrating hole 16 of the panel member 14.

As shown in Fig. 1 to Fig. 3, the hole plug 20 is provided with the outer periphery wall portion 22, the flange portion 24, a pawl portion 26, a closure portion 28 and an abutting portion 30. The hole plug 20 according to the present exemplary embodiment is an integrally molded component formed of a resiliently deformable resin.

The outer periphery wall portion 22 is formed in a tubular shape (in the present exemplary embodiment, a round tube shape). The outer periphery wall portion 22 is formed for insertion into the penetrating hole 16 of the panel member 14 and the burring hole 12 of the bracket 10. The term "round tube shape" as used in the present exemplary embodiment is intended to encompass shapes whose cross sections are circular or oval. The term "annular" as used in the present exemplary embodiment is also intended to encompass circular and oval shapes.

The flange portion 24 protrudes toward the plug radial direction outer side from an end portion 22A that is at the opposite side of the outer periphery wall portion 22 from the plug insertion direction side thereof. The flange portion 24 is formed in an annular shape. A diameter D3 of a distal end portion 12B of the flange portion 24 according to the present exemplary embodiment is greater than the diameter D2 of the penetrating hole 16 of the panel member 14. Therefore, in the state in which the hole plug 20 is attached at the burring hole 12 of the bracket 10, surrounding portions of the penetrating hole 16 of the panel member 14 are covered by the flange portion 24.

The pawl portion 26 projects from the side of an end portion 22B that is at the plug insertion direction side of the outer periphery wall portion 22. The pawl portion 26 projects toward the plug radial direction outer side and to the opposite side from the plug insertion direction. The pawl portion 26 is formed continuously along an outer periphery of the outer periphery wall portion 22 and is formed in an annular shape. A diameter D4 of a distal end of the pawl portion 26 is greater than the diameter D1 of the burring hole 12. That is, the distal end of the pawl portion 26 overlaps as seen in the plug insertion direction with the distal end portion 24A of a round tube portion 12A of the burring hole 12. When the hole plug 20 (the outer periphery wall portion 22) is being inserted into the burring hole 12, an outer periphery face of the pawl portion 26 abuts against an inner periphery face of the round tube portion 12A of the burring hole 12, and the pawl portion 26 deforms in a direction of reducing diameter. When the pawl portion 26 in this reduced-diameter state passes beyond a distal end portion 12B of the round tube portion 12A, the pawl portion 26 restores to the original state thereof. Hence, because the diameter D4 of the distal end of the pawl portion 26 is greater than the diameter D1 of the burring hole 12, if a force acts in a direction to remove the hole plug 20 from the burring hole 12 (the opposite direction from the plug insertion direction), the pawl portion 26 engages with (abuts against) the distal end portion 12B, limiting movement of the hole plug 20 in the removal direction.

The closure portion 28 extends between inner sides of the outer periphery wall portion 22 and closes off the inside of the outer periphery wall portion 22. Therefore, in the state in which the hole plug 20 is attached at the burring hole 12 of the bracket 10, the burring hole 12 is closed off by the closure portion 28. The closure portion 28 is provided with an annular protruding portion 32, an annular inner periphery wall portion 34, and a face plate portion 36. The protruding portion 32 protrudes toward the plug radial direction inner side from the end portion 22B at the plug insertion direction side of the outer periphery wall portion 22. The inner periphery wall portion 34 extends from an inner periphery end portion of the protruding portion 32 to the opposite side from the plug insertion direction. The face plate portion 36 extends between end portions of the inner periphery wall portion 34 that are at the opposite side of the inner periphery wall portion 34 from the plug insertion direction.

Reinforcing ribs 38 that connect the inner periphery wall portion 34 with the outer periphery wall portion 22 are formed between the inner periphery wall portion 34 and the outer periphery wall portion 22. The reinforcing ribs 38 are formed at intervals in the circumferential direction of the outer periphery wall portion 22. When the hole plug 20 is being inserted into the burring hole 12, the hole plug 20 can be easily inserted into the burring hole 12 by the face plate portion 36 being pushed in. Because the inner periphery wall portion 34 and outer periphery wall portion 22 are connected by the reinforcing ribs 38, a pushing force pushing against the face plate portion 36 may be efficiently transmitted to the outer periphery wall portion 22. Further, because the outer periphery wall portion 22 is supported by the reinforcing ribs 38, tilting of the outer periphery wall portion 22 toward the plug radial direction inner side is suppressed.

An annular protruding portion 40 is formed at an intermediate portion in the plug insertion direction of the outer periphery wall portion 22 (a portion between the end portion 22A and the end portion 22B in the plug insertion direction). The protruding portion 40 is inflected partway along the intermediate portion and protrudes toward the plug radial direction outer side. A distal end portion side (outer periphery end portion side) of the protruding portion 40 configures the abutting portion 30. The distal end portion side of the protruding portion 40 overlaps with a periphery edge portion 12C of the burring hole 12 as seen in the plug insertion direction.

Now, operational effects of the hole plug 20 according to the present exemplary embodiment are described.

In the hole plug 20, when the face plate portion 36 of the closure portion 28 is pushed and the outer periphery wall portion 22 enters into the round tube portion 12A of the burring hole 12, the pawl portion 26 engages with the distal end portion 12B of the round tube portion 12A. Hence, disengagement of the hole plug 20 from the burring hole 12 is prevented. In the engaged state of the pawl portion 26, the closure portion 28 closes off the burring hole 12 and the flange portion 24 covers surrounding portions of the burring hole 12 and surrounding portions of the penetrating hole 16. Therefore, the burring hole 12 and the penetrating hole 16 are hidden by the hole plug 20.

When the hole plug 20 is being inserted into the burring hole 12, if the closure portion 28 is pushed more strongly than necessary, the rear face 24B of the flange portion 24 abuts against the periphery edge portion 12C, which is inflected in a circular arc shape, of the burring hole 12 and the flange portion 24 deforms in a direction of reducing diameter. The flange portion 24 starts to be dragged inside the burring hole 12 by this diameter-reducing deformation. However, in the hole plug 20, the abutting portion 30 (the distal end portion side of the protruding portion 40) that overlaps with the periphery edge portion 12C of the burring hole 12 as seen in the plug insertion direction abuts against the periphery edge portion 12C of the burring hole 12. Therefore, when the hole plug 20 is being attached to the burring hole 12 formed in the bracket 10, the hole plug 20 is more inhibited from passing through the burring hole 12 compared to, for example, a structure in which the protruding portion 40 is not provided at the outer periphery wall portion 22.

In the hole plug 20, the distal end portion side of the protruding portion 40 formed at the intermediate portion of the outer periphery wall portion 22 is formed to serve as the abutting portion 30. Therefore, in contrast to, for example, a structure in which an abutting portion for abutting against the periphery edge portion 12C of the burring hole 12 is formed at the hole plug 20 as a dedicated portion, there is no need to greatly alter the shape of the hole plug 20, and design costs may be restrained.

In the hole plug 20, a wall portion 22C of the outer periphery wall portion 22 from the protruding portion 40 to the end portion 22A extends in the plug insertion direction. Therefore, when the abutting portion 30 abuts against the periphery edge portion 12C of the burring hole 12, the abutting portion 30 is braced in the opposite direction to an insertion force. Thus, the flange portion 24 may be further inhibited from being dragged into the burring hole 12.

### - Alternative Embodiments -

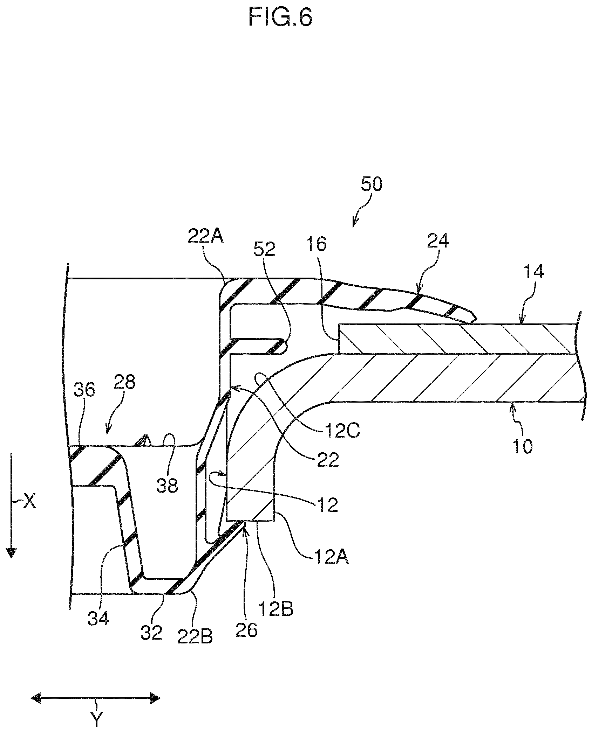

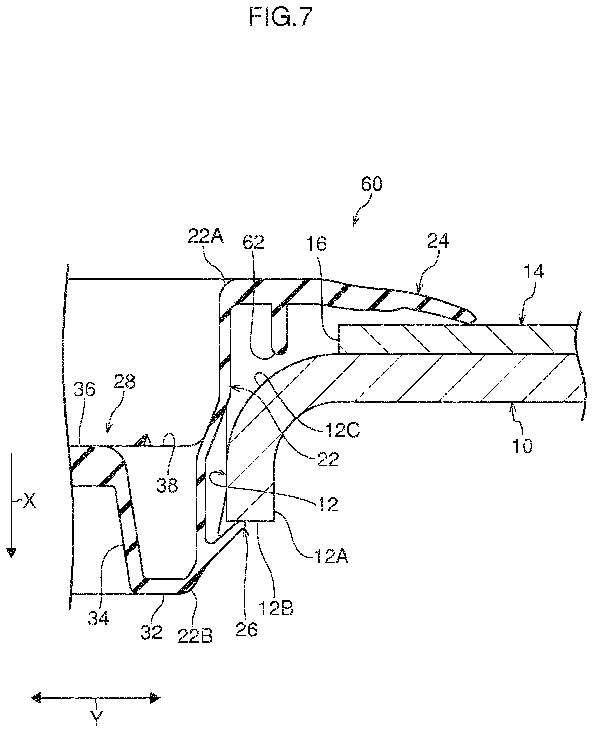

In the exemplary embodiment described above, the distal end portion side of the protruding portion 40 configures the abutting portion 30, but the present disclosure is not limited by this structure. For example, as in a hole plug 50 illustrated in Fig. 6, a structure may be provided with an annular protruding portion 52 that protrudes toward the plug radial direction outer side from an outer periphery face of the outer periphery wall portion 22 instead of the protruding portion 40 being formed at the outer periphery wall portion 22. Similarly to the protruding portion 40 according to the exemplary embodiment described above, the protruding portion 52 overlaps with the periphery edge portion 12C of the burring hole 12 as seen in the plug insertion direction. As a further example, as in a hole plug 60 illustrated in Fig. 7, a structure may be provided with a protruding portion 62 in a round tube shape that protrudes in the plug insertion direction from a rear face 24B of the flange portion 24. Similarly to the protruding portion 40 according to the exemplary embodiment described above, the protruding portion 62 overlaps with the periphery edge portion 12C of the burring hole 12 as seen in the plug insertion direction. As still another example, a structure may be both provided with the protruding portion 52 at the outer periphery wall portion 22 and provided with the protruding portion 62 at the flange portion 24.

In the exemplary embodiment described above, the flange portion 24 protrudes from the end portion 22A of the outer periphery wall portion 22, but the present disclosure is not limited by this structure. For example, the flange portion 24 may protrude from the end portion 22A side of the outer periphery wall portion 22 (i.e., further to the end portion 22A side than the middle in the plug insertion direction of the outer periphery wall portion 22).

In the exemplary embodiment described above, the pawl portion 26 projects from the end portion 22B side of the outer periphery wall portion 22 (i.e., further to the end portion 22B side than the middle in the plug insertion direction of the outer periphery wall portion 22), but the present disclosure is not limited by this structure. For example, the pawl portion 26 may project from the end portion 22B of the outer periphery wall portion 22.

In the exemplary embodiment described above, the pawl portion 26 is formed in an annular shape, but the present disclosure is not limited by this structure. Structures are possible in which a plural number of the pawl portion 26 are formed at the outer periphery face of the outer periphery wall portion 22, spaced apart in the circumferential direction.

An exemplary embodiment of the present disclosure is described hereabove. However, the present disclosure is not limited by these descriptions and it will be clear that numerous modifications beyond these descriptions may be embodied within a technical scope not departing from the scope of the appended claims.

## Claims

1. A hole plug (20), comprising:
a tubular outer periphery wall portion (22) for insertion into a round tube portion (12A) of a burring hole (12) formed in an attachment member;
an annular flange portion (24) that protrudes toward a radial direction outer side of the outer periphery wall portion (22), from an end portion side of the outer periphery wall portion (22) at an opposite side from an insertion direction side of the outer periphery wall portion (22), the flange portion (24) covering a surrounding portion of the burring hole (12);
a pawl portion (26) that projects toward the radial direction outer side from the outer periphery wall portion (22), the pawl portion (26) engaging with a distal end portion (12B) of the round tube portion (12A);
a closure portion (28) that extends between inner sides of the outer periphery wall portion (22), the closure portion (28) closing off the burring hole (12); and
an abutting portion (30) provided at the outer periphery wall portion (22), the abutting portion (30) overlapping with a periphery edge portion (12C) of the burring hole (12) as seen in the insertion direction, and the abutting portion (30) configured to abut the periphery edge portion (12C);
a protruding portion (40) formed at an intermediate portion, in the insertion direction, of the outer periphery wall portion (22), the protruding portion (40) being inflected partway along the intermediate portion and protruding along the radial direction toward the radial direction outer side;
a distal end portion (12B) side of the protruding portion (40) configuring the abutting portion (30);
a face plate portion (36); and
reinforcing ribs (38),
wherein
the outer periphery wall portion (22) is inserted into the burring hole (12), the abutting portion (30) abuts on the peripheral edge portion (12C) to inhibit the hole plug (20) from passing through the burring hole (12),
**characterized in that**
the closure portion (28) is provided with an annular protruding portion (32), an annular inner periphery wall portion (34), and the face plate portion (36);
the protruding portion (32) protrudes toward the radial direction inner side from the end portion at the insertion direction side of the outer periphery wall portion (22);
the inner periphery wall portion (34) extends from an inner periphery end portion of the protruding portion (32) to the opposite side from the insertion direction, and
the face plate portion (36) extends between end portions of the inner periphery wall portion (34) that are at the opposite side of the inner periphery wall portion (34) from the insertion direction,
wherein the reinforcing ribs (38) connect the inner periphery wall portion (34) with the outer periphery wall portion (22) are formed between the inner periphery wall portion (34) and the outer periphery wall portion (22).

2. The hole plug according to claim 1, wherein:
a wall portion (22C) of the outer periphery wall portion (22) from the protruding portion (40) to the end portion at the opposite side from the insertion direction extends in the insertion direction.

## Patentansprüche

1. Lochstopfen (20), umfassend:
einen rohrförmigen Außenumfangswandabschnitt (22) für ein Einsetzen in einen runden Rohrabschnitt (12A) eines in einem Befestigungselement ausgebildeten Kragenlochs (12);
einen ringförmigen Flanschabschnitt (24), der zu einer in radialer Richtung gelegenen Außenseite des Außenumfangswandabschnitts (22) hin von einer Endabschnittsseite des Außenumfangswandabschnitts (22) an einer Seite, die einer in Einsetzrichtung gelegenen Seite des Außenumfangswandabschnitts (22) entgegengesetzt ist, vorsteht, wobei der Flanschabschnitt (24) einen das Kragenloch (12) umgebenden Abschnitt abdeckt;
einen Sperrklinkenabschnitt (26), der zu der in radialer Richtung gelegenen Außenseite hin von dem Außenumfangswandabschnitt (22) vorspringt, wobei der Sperrklinkenabschnitt (26) mit einem distalen Endabschnitt (12B) des runden Rohrabschnitts (12A) in Eingriff steht;
einen Verschlussabschnitt (28), der sich zwischen Innenseiten des Außenumfangswandabschnitts (22) erstreckt, wobei der Verschlussabschnitt (28) das Kragenloch (12) verschließt; und
einen Anlageabschnitt (30), der an dem Außenumfangswandabschnitt (22) bereitgestellt ist, wobei der Anlageabschnitt (30) bei Betrachtung in der Einsetzrichtung mit einem Umfangsrandabschnitt (12C) des Kragenlochs (12) überlappt und der Anlageabschnitt (30) konfiguriert ist, um an dem Umfangsrandabschnitt (12C) anzuliegen;
einen vorstehenden Abschnitt (40), der in der Einsetzrichtung an einem mittleren Abschnitt des Außenumfangswandabschnitts (22) ausgebildet ist, wobei der vorstehende Abschnitt (40) nach einem Teil des Weges entlang des mittleren Abschnitts abgewinkelt ist und entlang der radialen Richtung zu der in radialer Richtung gelegenen Außenseite hin vorsteht;
eine Seite des distalen Endabschnitts (12B) des vorstehenden Abschnitts (40), die den Anlageabschnitt (30) konfiguriert;
einen Stirnplattenabschnitt (36); und
Verstärkungsrippen (38),
wobei
der Außenumfangswandabschnitt (22) in das Kragenloch (12) eingesetzt wird, der Anlageabschnitt (30) an dem Umfangsrandabschnitt (12C) anliegt, um zu verhindern, dass der Lochstopfen (20) durch das Kragenloch (12) hindurchtritt,
**dadurch gekennzeichnet, dass**
der Verschlussabschnitt (28) mit einem ringförmigen vorstehenden Abschnitt (32), einem ringförmigen Innenumfangswandabschnitt (34) und dem Stirnplattenabschnitt (36) bereitgestellt ist;
der vorstehende Abschnitt (32) zu der in radialer Richtung gelegenen Innenseite hin von dem Endabschnitt an der in Einsetzrichtung gelegenen Seite des Außenumfangswandabschnitts (22) vorsteht;
der Innenumfangswandabschnitt (34) sich von einem Innenumfangsendabschnitt des vorstehenden Abschnitts (32) zu der Seite, die der Einsetzrichtung entgegengesetzt ist, erstreckt, und
der Stirnplattenabschnitt (36) sich zwischen Endabschnitten des Innenumfangswandabschnitts (34) erstreckt, die sich an der Seite des Innenumfangswandabschnitts (34) befinden, die der Einsetzrichtung entgegengesetzt ist,
wobei die Verstärkungsrippen (38), die den Innenumfangswandabschnitt (34) mit dem Außenumfangswandabschnitt (22) verbinden, zwischen dem Innenumfangswandabschnitt (34) und dem Außenumfangswandabschnitt (22) ausgebildet sind.

2. Lochstopfen nach Anspruch 1, wobei:
ein Wandabschnitt (22C) des Außenumfangswandabschnitts (22) sich von dem vorstehenden Abschnitt (40) zu dem Endabschnitt an der Seite, die der Einsetzrichtung entgegengesetzt ist, in der Einsetzrichtung erstreckt.

## Revendications

1. Bouchon d'orifice (20), comprenant :
une partie de paroi périphérique externe tubulaire (22) destinée à être insérée dans une partie de tube rond (12A) d'un orifice de barbe (12) formé dans un élément de fixation ;
une partie de bride annulaire (24) qui fait saillie vers un côté externe de direction radiale de la partie de paroi périphérique externe (22), depuis un côté de partie d'extrémité de la partie de paroi périphérique externe (22) au niveau d'un côté opposé à un côté de direction d'insertion de la partie de paroi périphérique externe (22), la partie de bride (24) recouvrant une partie environnante de l'orifice de barbe (12) ;
une partie de cliquet (26) qui fait saillie vers le côté externe dans la direction radiale depuis la partie de paroi périphérique externe (22), la partie de cliquet (26) venant en prise avec une partie d'extrémité distale (12B) de la partie de tube rond (12A) ;
une partie de fermeture (28) qui s'étend entre les côtés intérieurs de la partie de paroi de périphérie extérieure (22), la partie de fermeture (28) obturant l'orifice de barbe (12) ; et
une partie de butée (30) prévue au niveau de la partie de paroi périphérique externe (22), la partie de butée (30) chevauchant une partie de bord périphérique (12C) de l'orifice de barbe (12) vue dans la direction d'insertion, et la partie de butée (30) étant conçue pour venir en butée contre la partie de bord périphérique (12C) ;
une partie saillante (40) formée au niveau d'une partie intermédiaire, dans la direction d'insertion, de la partie de paroi périphérique externe (22), la partie saillante (40) étant infléchie à mi-chemin le long de la partie intermédiaire et faisant saillie le long de la direction radiale vers le côté externe de la direction radiale ;
un côté de partie d'extrémité distale (12B) de la partie saillante (40) configurant la partie de butée (30) ;
une partie de plaque avant (36) ; et
des nervures de renfort (38),
dans lequel
la partie de paroi périphérique externe (22) est insérée dans l'orifice de barbe (12), la partie de butée (30) vient en butée contre la partie de bord périphérique (12C) pour empêcher le bouchon d'orifice (20) de traverser l'orifice de barbe (12),
**caractérisé en ce que**
la partie de fermeture (28) est pourvue d'une partie saillante annulaire (32), d'une partie de paroi périphérique interne annulaire (34) et de la partie de plaque avant (36) ;
la partie saillante (32) fait saillie vers le côté interne dans la direction radiale à partir de la partie d'extrémité au niveau du côté de la direction d'insertion de la partie de paroi périphérique externe (22) ;
la partie de paroi périphérique interne (34) s'étend depuis une partie d'extrémité périphérique interne de la partie saillante (32) jusqu'au côté opposé à la direction d'insertion, et
la partie de plaque avant (36) s'étend entre des parties d'extrémité de la partie de paroi de périphérie interne (34) qui se trouvent du côté opposé de la partie de paroi de périphérie interne (34) par rapport à la direction d'insertion,
dans lequel les nervures de renfort (38) qui relient la partie de paroi périphérique interne (34) à la partie de paroi périphérique externe (22) sont formées entre la partie de paroi périphérique interne (34) et la partie de paroi périphérique externe (22).

2. Bouchon d'orifice selon la revendication 1, dans lequel :
une partie de paroi (22C) de la partie de paroi périphérique externe (22) depuis la partie saillante (40) jusqu'à la partie d'extrémité du côté opposé à la direction d'insertion s'étend dans la direction d'insertion.
